# FASCICULE DE BREVET EUROPEEN

(11) **EP 0 546 995 B1**
(45) Date de publication et mention de la délivrance du brevet: **28.02.1996**
(21) Numéro de dépôt: 92810935.4
(22) Date de dépôt: 01.12.1992
(51) Int. Cl.: F16H 1/46, E06B 9/72

(54) **Réducteur planétaire pour moteur tubulaire**
Untersetzungsplanetengetriebe für Rohrmotor
Planetary reduction gearing for tubular motor

(30) Priorité: 10.12.1991 FR 9115302
(43) Date de publication de la demande: 16.06.1993
(73) Titulaire: SOMFY, F-74300 Cluses (FR)
(72) Inventeur: Jacqui, Thierry, F-74700 Sallanches (FR)
(74) Mandataire: Meylan, Robert Maurice

(56) Documents cités:
- EP-A- 0 278 865
- DE-U- 7 901 479
- US-A- 3 513 724

## Description

La présente invention a pour objet un réducteur planétaire tel que défini au préambule de la revendication 1.

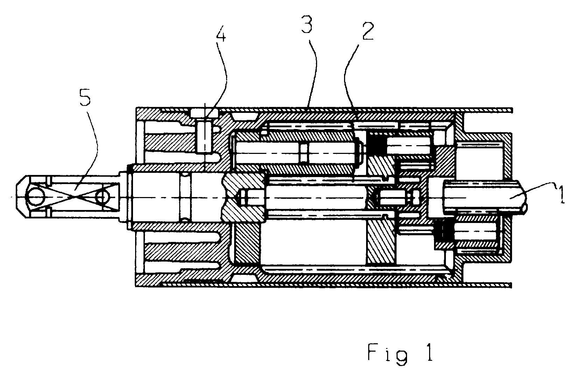

Les moteurs tubulaires connus, tels que décrits par exemple dans les brevets FR-A-2 480 846 et FR-A-2 2 376 285, pour l'entraînement d'un tube d'enroulement de stores ou volets enroulables, ainsi que pour l'entraînement de portes, sont constitués d'un moteur et d'un réducteur planétaire disposés bout à bout dans un tube fixé au stator du moteur et à la couronne du réducteur planétaire pour l'immobilisation de celle-ci. Le réducteur comprend généralement deux ou trois étages dont les satellites roulent dans une couronne commune fixée au tube au moyen de vis. Afin d'assurer un diamètre du moteur tubulaire aussi petit que possible, le tube présente une paroi très mince et les vis de fixation agissent par leur tête cylindrique dans un trou du tube à la manière d'une clavette. Compte tenu des couples de transmission à supporter et des à-coups de démarrage et d'arrêt, la sollicitation des vis et du tube est extrêmement élevée et les vis doivent avoir un ancrage important dans la matière synthétique constituant généralement le réducteur. La construction actuelle correspondante est représentée à la figure 1. On reconnaît l'arbre 1 du moteur, la couronne 2 du réducteur à trois étages, le tube 3 solidaire du stator du moteur et fixé à la couronne 2 par des vis à tête cylindrique telles que la vis 4 et l'arbre de sortie 5 entraînant un tube d'enroulement non représenté. on constate que l'ancrage de la vis 4 est assuré par une importante quantité de matière s'étendant radialement et axialement en avant du dernier étage du réducteur. Cette matière représente un encombrement axial important et limite en outre le diamètre de l'arbre de sortie et par conséquent le couple à la sortie du réducteur.

Du document EP-A-0 278 865 illustrant le préambule de la revendication 1, on connaît un réducteur planétaire à deux étages pour moteur tubulaire, dont la couronne, immobilisée en rotation, est constituée de deux parties reliées entre elles par une bague intercalaire immobilisée dans le tube. A cet effet, les deux parties de couronne sont munies de languettes à crochet s'accrochant dans des gorges de la bague intercalaire. Ce mode de liaison implique une déformation élastique des languettes et la solidarisation en rotation n'est réalisée qu'en un ou deux points seulement et que dans une seule position angulaire de la bague et des parties de couronne.

L'invention a pour but de réaliser une fixation du tube au réducteur ne présentant pas les inconvénients de l'art antérieur.

Le réducteur planétaire selon l'invention est défini à la revendication 1.

La pièce de liaison intercalaire peut être une pièce de haute résistance, de faible longueur et son encombrement radial n'a pas d'influence sur le diamètre de l'arbre de sortie du réducteur. La fixation du tube se fait de préférence dans des surépaisseurs locales de la pièce de liaison, surépaisseurs en forme de crabot contribuant à l'emboîtement sans influence sur la longueur du réducteur.

La construction selon l'invention présente corollairement un autre avantage important. La couronne du réducteur étant en deux parties, le réducteur peut être conçu sous forme modulaire. Le montage du réducteur est facilité et l'étage de sortie, en particulier la forme de l'arbre de sortie, peut être adapté au besoin, sans modification de l'étage d'entrée, c'est-à-dire sans augmentation des stocks en ce qui concerne cet étage d'entrée.

Le dessin annexé représente, à titre d'exemple, un mode d'exécution du réducteur selon l'invention, ainsi que des variantes de ce mode.

La figure 2 est une vue en coupe, selon II-II de la figure 3, d'un réducteur planétaire selon le mode principal d'exécution.

La figure 3 est une vue en coupe selon III-III de la figure 2.

La figure 4 représente une première variante d'exécution.

La figure 5 représente une seconde variante comportant également la modification selon la première variante d'exécution.

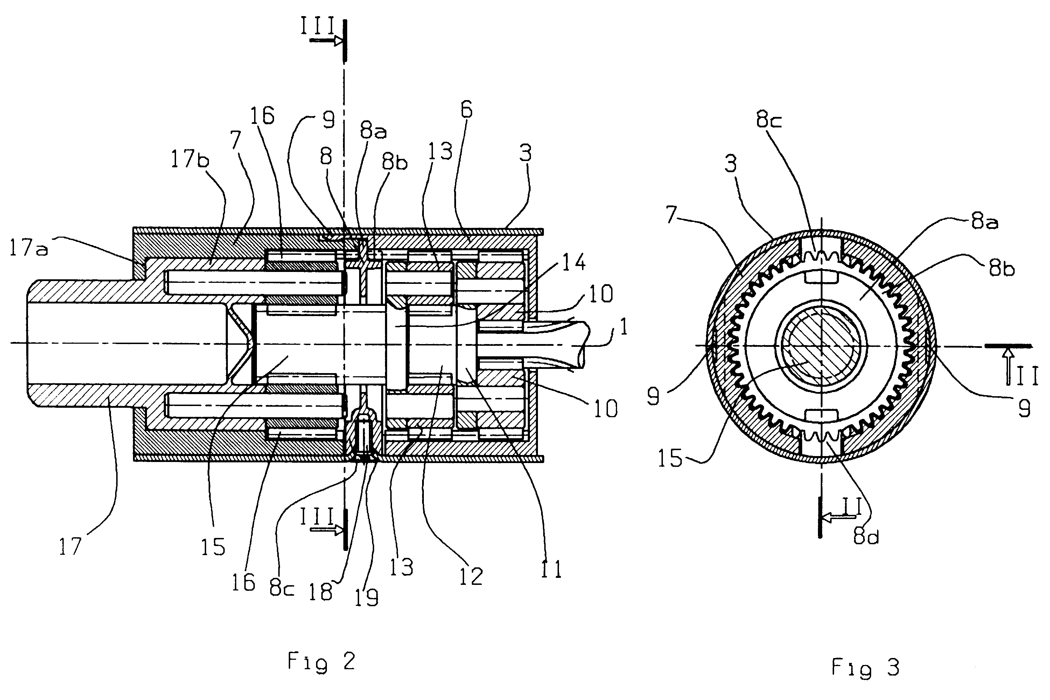

Les figures 2 et 3 représentent un réducteur planétaire à trois étages, comme le réducteur représenté à la figure 1. La couronne de ce réducteur planétaire est constituée de deux parties 6 et 7 en matière synthétique entre lesquelles est disposée une pièce de liaison intercalaire 8 en métal. La partie 6 est accrochée à la partie 7 par deux crochets 9 formés à l'extrémité de deux languettes axiales et venant s'accrocher chacune dans un cran formé dans la partie 7. Cet accrochage est verrouillé par le tube 3 qui empêche les languettes de fléchir.

L'arbre 1 du moteur entraîne trois satellites 10 montés sur un porte-satellites 11 et roulant dans la denture de la partie 6 de la couronne. Le porte-satellites 11 est solidaire d'un planétaire 12 entraînant trois satellites 13 portés par un porte-satellites 14 et roulant dans la denture de la partie 6 de la couronne. Le porte-satellites 14 est solidaire d'un planétaire 15 entraînant trois satellites 16 roulant dans la denture de la partie 7 de la couronne et montés directement sur l'arbre de sortie 17. Le réducteur planétaire comporte donc trois étages caractérisés par les trois jeux de satellites. La partie 7 de la couronne présente une partie lisse, en avant des satellites 16, qui sert de palier à l'arbre 17.

La pièce de liaison intercalaire 8 est disposée entre le deuxième et le troisième étage du réducteur. Elle est constituée d'un disque 8a pincé entre les deux parties 6 et 7 de la couronne et présentant, en un point intermédaire de son rayon, une jante dentée 8b s'étendant de chaque côté du disque 8a et dont la denture correspond à la denture de la couronne du réducteur et qui est en prise, d'un côté avec la partie 6 de la couronne et de l'autre côté avec la partie 7 de la couronne. En d'autres termes, la pièce intermédaire 8 est emboîtée dans chacune des parties de la couronne du réducteur. En deux points diamétralement opposés, le disque 8a présente en outre deux surépaisseurs de forme carrée 8c, respectivement 8d, qui sont emboîtées dans des découpes du bord de chacune des parties 6 et 7 de la couronne. Ces surépaisseurs 8c et 8d contribuent donc à l'emboîtement de la pièce de liaison, mais elles servent avant tout à la fixation du tube 3 au moyen de vis 18 à tête conique qui viennent se visser dans chacune des surépaisseurs 8c et 8d, celles-ci présentant une creusure conique 19 de profondeur suffisante pour permettre à la tôle constituant le tube 3 de se déformer et d'être pincée entre la tête de la vis et le fond de cette creusure. Ceci permet d'utiliser des vis à tête conique affleurant la surface extérieure du tube 3 avec un tube 3 très mince, les trous pratiqués dans le tube 3 présentant un diamètre juste suffisant pour le passage de la partie filetée des vis 18. La fixation du tube 3 est ainsi beaucoup plus résistante que la fixation selon l'art antérieur.

L'exécution de la couronne du réducteur en deux parties facilite la construction et le montage du réducteur. Les deux parties 6 et 7 de la couronne du réducteur peuvent être exécutées sous la forme de pots présentant simplement un passage pour l'arbre 1 du moteur, respectivement l'arbre de sortie 17. Les planétaires 12 et 15, avec leurs porte-satellites, peuvent être simplement introduits dans la partie 6 de la couronne. Il en est de même de l'arbre de sortie 17 qui est simplement enfilé dans la partie 7 de la couronne dans laquelle il est retenu axialement par une portée 17a . Le diamètre de l'arbre de sortie 17 peut être sensiblement plus grand que dans l'art antérieur et il est venu d'une pièce avec le porte-satellites 17b portant les satellites 16, ce qui réduit le nombre de pièces et simplifie la fabrication. L'exécution est modulaire, puisqu'il est possible d'associer aux deux premiers étages du réducteur des étages de sorties présentant des arbres de sorties 17 de forme et de diamètre différents.

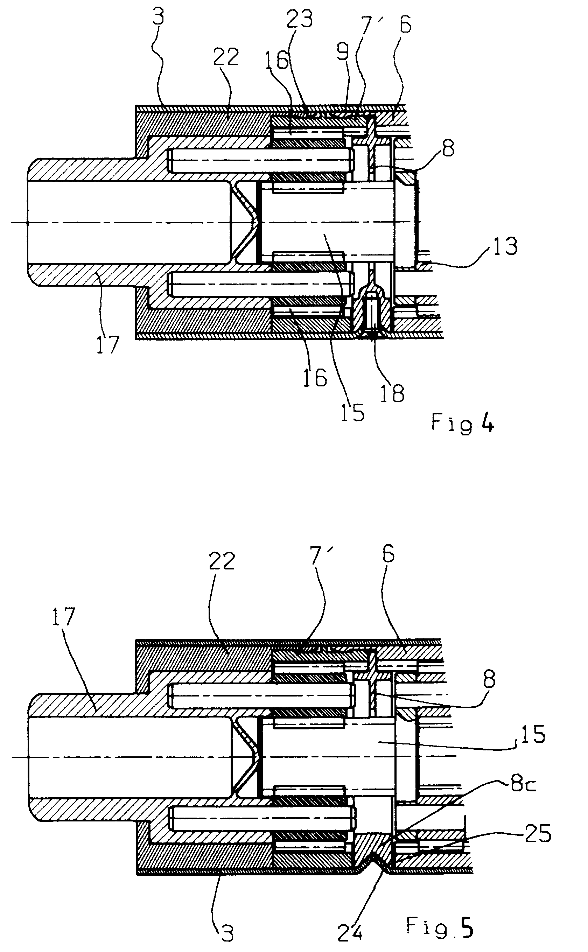

Dans la variante d'exécution représentée à la figure 4, qui est une coupe analogue à la coupe II-II, la seconde partie 7 de la couronne est remplacée par une seconde partie 7' sensiblement plus courte, ne s'étendant pas au-delà des satellites 16 de l'étage de sortie. Sur cette partie 7' est accrochée une partie 22 constituant le palier de l'arbre de sortie 17. L'accrochage de ce palier 22 à la partie 7' de la couronne est assuré par deux crochets 23 analogues aux crochets 9 et verrouillés comme ceux-ci par le tube 3. Cette construction permet d'utiliser des matériaux différents pour la partie 7' de la couronne et le palier 22. En particulier, le palier 22 peut être exécuté en plastique autolubrifiant, tandis que la partie de couronne 7' est exécutée en plastique dur.

La figure 5 représente une seconde variante d'exécution comprenant la modification selon la variante précédente. Dans cette seconde variante, le tube 6 n'est pas fixé à la pièce de la liaison 8 au moyen de vis, mais par repoussage de la paroi du tube 3, comme représenté en 24 dans des creux ou dépressions 25 des surépaisseurs 8c de la pièce de liaison 8.

Les exemples d'exécution décrits sont bien entendu susceptibles de nombreuses modifications de détail. En particulier, les crochets élastiques et les crans peuvent être inversés aussi bien sur chacune des parties 6 et 7 de la couronne que sur le palier 22 et la partie 7' de la couronne. L'arbre de sortie du réducteur et le porte-satellites de l'étage de sortie pourraient être constitués de deux pièces distinctes.

## Revendications

1. Réducteur planétaire monté dans le tube (3) d'un moteur tubulaire, comprenant au moins deux étages à savoir, un étage d'entrée (10) et un étage de sortie (16) dont le porte-satellites est solidaire de l'arbre de sortie (17) du réducteur et dans lequel la couronne du réducteur immobilisée en rotation est constituée de deux parties (6, 7; 6', 7') dont l'une (6) engrène avec les satellites de l'étage d'entrée et l'autre (7; 7') engrène avec les satellites de l'étage de sortie, ces deux parties de couronne étant reliées entre elles par une pièce de liaison intercalaire (8; 20) emboîtée axialement dans chacune des deux parties de couronne et fixée au tube (3), caractérisé en ce que la pièce de liaison intercalaire (8) présente une denture extérieure correspondant à la denture intérieure des deux parties de la couronne et par laquelle elle est emboîtée dans la denture des deux parties de la couronne.

2. Réducteur planétaire selon la revendication 1, caractérisé en ce que la pièce de liaison intercalaire (8) présente localement, à la périphérie de la denture, au moins une partie massive en forme de plots (8c) faisant partie des moyens d'emboîtement et dans laquelle est fixé le tube (3).

3. Réducteur planétaire selon la revendication 1 ou 2, caractérisé en ce que les deux parties de la couronne (6, 7; 6', 7') présentent des moyens d'accrochage mutuel à une languette élastique (9) verrouillés par le tube (3).

4. Réducteur planétaire selon l'une des revendications 1 à 3, caractérisé en ce que le porte-satellites de l'étage de sortie et l'arbre de sortie du réducteur sont constitués d'une seule pièce (17).

5. Réducteur planétaire selon la revendication 4, caractérisé en ce que l'arbre de sortie (17) est monté dans un palier (22) relié à la partie de couronne (7') correspondant à l'étage de sortie par des moyens d'accrochage (23) verrouillés par le tube (3).

6. Réducteur planétaire selon l'une des revendications 1 à 5, caractérisé en ce que le tube (3) est fixé à la pièce de liaison au moyen de vis (18).

7. Réducteur planétaire selon l'une des revendications 1 à 5, caractérisé en ce que le tube (3) est fixé à la pièce de liaison par repoussage (24) dans au moins une dépression (24) de la pièce de liaison.

## Patentansprüche

1. Untersetzungs-Planetengetriebe, welches im Rohr (3) eines Rohrmotors montiert ist, und aus wenigstens zwei Etagen besteht, nämlich eine Eingangsetage (10) und eine Ausgangsetage (16), deren Satellitenträger mit der Ausgangswelle (17) des Untersetzungsgetriebes fest verbunden ist und in welcher die in Drehung stillstehende Krone des Untersetzungsgetriebes aus zwei Teilen (6, 7; 6', 7') besteht, von denen das eine (6) mit den Satelliten der Eingangsetage kämmt und das andere (7; *7')* mit den Satelliten der Ausgangsetage kämmt, wobei diese zwei Teile der Krone durch ein zwischengelegtes Verbindungsstück (8; 20) miteinander verbunden sind, welches axial in jedem der zwei Kronenteile eingesteckt und am Rohr (3) befestigt ist, dadurch gekennzeichnet, dass das zwischengelegte Verbindungsstück (8) eine äussere Verzahnung aufweist, welche der inneren Verzahnung der zwei Kronenteile entspricht und durch welche es in die Verzahnung der zwei Kronenteile eingesteckt wird.

2. Untersetzungs-Planetengetriebe nach dem Anspruch 1, dadurch gekennzeichnet, dass das zwischengelegte Verbindungsstück (8) örtlich auf dem Umfang der Verzahnung mindestens ein massives Teil in Form von Steckstellen (8c) aufweist, welches den Einsteckmitteln gehört und in welcher das Rohr (3) befestigt ist.

3. Untersetzungs-Planetengetriebe nach einem der Ansprüche 1 oder 2, dadurch gekennzeichnet, dass die zwei Teile der Krone (6, 7; 6', 7') gegenseitige Mittel für das Einhaken auf eine elastische Zunge (9) aufweisen, welche durch das Rohr (3) verriegelt werden.

4. Untersetzungs-Planetengetriebe nach einem der Ansprüche 1 bis 3, dadurch gekennzeichnet, dass der Satellitenträger der Ausgangsetage und die Ausgangswelle des Untersetzungsgetriebes aus einem Stück (17) gebildet sind.

5. Untersetzungs-Planetengetriebe nach Anspruch 4, dadurch gekennzeichnet, dass die Ausgangswelle in einem Lager (22) montiert ist, welches am Teil der Krone (7'), das der Ausgangsetage entspricht, durch Einhakmittel (23) verbunden ist, die durch das Rohr (3) verriegelt werden.

6. Untersetzungs-Planetengetriebe nach einem der Ansprüche 1 bis 5, dadurch gekennzeichnet, dass das Rohr am Verbindungsstück mittels einer Schraube (18) befestigt ist.

7. Untersetzungs-Planetengetriebe nach einem der Ansprüche 1 bis 5, dadurch gekennzeichnet, dass das Rohr (3) am Verbindungsstück durch Flachstanzen (24) in mindestens einer Ausnehmung (24) des Verbindungsstücks befestigt ist.

## Claims

1. A planetary reduction gear mounted in the tube (3) of a tubular motor, comprising at least two stages, namely an input stage (10) and an output stage (16) in which the satellite holder is secured to the output shaft (17) of the reduction gear, wherein the rotationally immobilized ring gear of the reduction gear consists of two parts (6, 7; 6', 7') one (6) of which meshes with the satellites of the input stage and the other (7; 7') meshes with the satellites of the output stage, these two ring gear parts being connected to one another by an interposed linking component (8; 20) interlocked axially in each of the two ring gear parts and fixed to the tube (3), characterized in that the interposed linking component (8) has external teeth corresponding to the internal teeth of the two parts of the ring gear and via which it is interlocked in the teeth of the two parts of the ring gear.

2. The planetary reduction gear as claimed in claim 1, characterized in that the interposed linking component (8) has locally, at the periphery of the teeth, at least one solid part in the form of pegs (8c) forming part of the interlocking means and in which the tube (3) is fixed.

3. The planetary reduction gear as claimed in claim 1 or 2, characterized in that the two parts of the ring gear (6, 7; 6', 7') have mutual fastening means with elastic tab (9) which are locked by the tube (3).

4. The planetary reduction gear as claimed in one of claims 1 to 3, characterized in that the satellite carrier of the output stage and the output shaft of the reduction gear are made up of a single component (17).

5. The planetary reduction gear as claimed in claim 4, characterized in that the output shaft (17) is mounted in a bearing (22) connected to the ring gear part (7') corresponding to the output stage via fastening means (23) locked by the tube (3).

6. The planetary reduction gear as claimed in one of claims 1 to 5, characterized in that the tube (3) is fixed to the linking component by means of screws (18).

7. The planetary reduction gear as claimed in one of claims 1 to 5, characterized in that the tube (3) is fixed to the linking component by pushing (24) the linking component back into at least one depression (25).
